# EUROPÄISCHE PATENTSCHRIFT

(11) **EP 3 732 950 B1**
(45) Veröffentlichungstag und Bekanntmachung des Hinweises auf die Patenterteilung: **18.06.2025**
(21) Anmeldenummer: 20151426.2
(22) Anmeldetag: 13.01.2020
(51) Int. Cl.: A01D 41/127, A01B 69/00

(54) **VERFAHREN FÜR DEN BETRIEB EINER SELBSTFAHRENDEN LANDWIRTSCHAFTLICHEN ARBEITSMASCHINE**
METHOD FOR OPERATING A SELF-PROPELLED AGRICULTURAL WORKING MACHINE
PROCÉDÉ DE FONCTIONNEMENT D'UN ENGIN AGRICOLE AUTOMATIQUE

(30) Priorität: 29.04.2019 DE 102019111040
(43) Veröffentlichungstag der Anmeldung: 04.11.2020
(73) Patentinhaber: CLAAS Selbstfahrende Erntemaschinen GmbH, 33428 Harsewinkel (DE)
(72) Erfinder: Middelberg, René, 49080 Osnabrück (DE); Neu, Sebastian, 49196 Bad Laer (DE); Berger, Arthur, 49143 Bissendorf (DE); Dieckmeyer, Sascha, 49326 Melle (DE); Irmer, Daniel, 33442 Herzebock-Clarholz (DE); Spiekermann, Sebastian, 48346 Ostbevern (DE)
(74) Vertreter: CLAAS Gruppe

(56) Entgegenhaltungen:
- EP-A1- 1 992 213
- DE-A1- 102011 017 621
- DE-A1- 102016 118 651
- DE-A1- 102017 122 710
- US-A1- 2014 324 272

## Beschreibung

Die Erfindung betrifft ein Verfahren für den Betrieb einer selbstfahrenden landwirtschaftlichen Arbeitsmaschine gemäß dem Oberbegriff von Anspruch 1 sowie eine solche selbstfahrende landwirtschaftliche Arbeitsmaschine gemäß Anspruch 12.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen, wie Traktoren oder dergleichen.

Bei dem Betrieb einer in Rede stehenden, selbstfahrenden landwirtschaftlichen Arbeitsmaschine kommt der sensorbasierten Überwachung des Umfelds der Arbeitsmaschine zunehmende Bedeutung zu. Dadurch, dass das Umfeld der Arbeitsmaschine nicht in standardisierter, sensorisch leicht erfassbarer Form vorliegt, sondern vielmehr in gewissen Grenzen eine nicht deterministische Struktur aufweist, stellt die sensorbasierte Erfassung von vorbestimmten Eigenschaften des Umfelds der Arbeitsmaschine eine Herausforderung dar. Dies gilt insbesondere für das Vorfeld, also den vor der landwirtschaftlichen Arbeitsmaschine liegenden Bereich des zu bearbeitenden Feldes.

Das bekannte Verfahren (US 6,389,785), von dem die Erfindung ausgeht, sieht in einer Variante eine Sensoranordnung vor, die ein laserbasiertes Sensorsystem aufweist. Dabei werden von dem laserbasierten Sensorsystem Eigenschaften des Vorfelds, auch als Vorfeldinformationen bezeichnet, basierend auf den Sensorinformationen des Sensorsystems erfasst. Ein Fahrerassistenzsystem der landwirtschaftlichen Arbeitsmaschine erzeugt dann basierend auf den Vorfeldinformationen Steueraktionen, die beispielsweise das Ausführen von Stellbewegungen eines Vorsatzgeräts zur Schwadaufnahme (Pick Up) umfassen.

Die benutzerseitige Einflussnahme auf die Steueraktionen ist allerdings begrenzt oder jedenfalls aufwendig, da dem Benutzer hierfür wesentliche Informationen nicht ohne Weiteres oder jedenfalls nicht mit der bestmöglichen Genauigkeit zur Verfügung stehen. Beispielsweise ist es benutzerseitig nicht ohne Weiteres möglich, die Position der Bestandskante quer zur Fahrtrichtung im Bereich unmittelbar vor dem Vorsatzgerät zu erkennen.

Aus der US 2014/324272 A1 ist ein Verfahren nach dem Oberbegriff des Anspruchs 1 bekannt.

Der Erfindung liegt das Problem zugrunde, das bekannte Verfahren derart auszugestalten und weiterzubilden, dass Eigenschaften des Vorfelds der landwirtschaftlichen Arbeitsmaschine dem Benutzer möglichst anwenderfreundlich zur Verfügung gestellt werden können.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Überlegung, die Sensorinformationen des laserbasierten Sensorsystems so aufzubereiten und dem Benutzer grafisch darzustellen, dass dieser für den jeweiligen landwirtschaftlichen Arbeitsauftrag wesentliche Vorfeldinformationen möglichst unmittelbar daraus ableiten kann. Dazu wird bei dem vorschlagsgemäßen Verfahren aus den Sensorinformationen ein Anzeigebild oder eine Anzeigebild-Sequenz erzeugt, die einen Bereich des Vorfelds, der für die Erlangung der besagten Informationen geeignet ist, in einer dreidimensionalen Ansicht darstellt. Eine solche Darstellung erlaubt es dem Benutzer aus einer für ihn bequemen Position heraus, wesentliche Vorfeldinformationen frühzeitig wahrzunehmen und gegebenenfalls Korrekturmaßnahmen einzuleiten.

Im Einzelnen wird vorgeschlagen, dass das Fahrerassistenzsystem ein Bildverarbeitungssystem zur Verarbeitung der Sensorinformationen aufweist und dass von dem Bildverarbeitungssystem basierend auf den Sensorinformationen des laserbasierten Sensorsystems auf einem Display des Fahrerassistenzsystems ein Anzeigebild oder eine Anzeigebild-Sequenz in Form einer dreidimensionalen Visualisierung des vorbestimmten, relevanten Vorfeldbereichs der Arbeitsmaschine erzeugt wird.

Unter einer "Anzeigebild-Sequenz" wird hier eine Aufeinanderfolge von mehreren Anzeigebildern, die aufeinanderfolgenden Sensorinformationen entsprechen, verstanden. Mit einer "dreidimensionalen Visualisierung" ist gemeint, dass das jeweilige Anzeigebild den vom Sensorsystem erfassten bzw. abgescannten Vorfeldbereich der Arbeitsmaschine in den drei Raumdimensionen "Länge", "Breite" und "Höhe" grafisch wiedergibt. Es wird also mit grafischen Mitteln auf einer zweidimensionalen Fläche, nämlich dem Display, ein räumlich wirkendes Abbild des Vorfeldbereichs erzeugt. Das jeweilige Anzeigebild wird insbesondere um eine grafische Darstellung von Koordinatenachsen für die Raumdimensionen "Länge", "Breite" und/oder "Höhe" ergänzt.

Die Sensorinformationen des laserbasierten Sensorsystems umfassen nach der bevorzugten Ausgestaltung gemäß Anspruch 2 auf die Feldebene bezogene Höheninformationen oder sind auf die Feldebene bezogene Höheninformationen. Als "Höheninformationen" werden die der geometrischen Höhe der sensorisch erfassten Objekte (Pflanzen, Tiere, Personen oder dergleichen) entsprechenden Daten bezeichnet, wobei die jeweilige Höheninformation als Längenmaß, insbesondere in Metern oder Zentimetern, oder prozentual vorliegen bzw. angezeigt werden kann.

Die Ansprüche 3 und 4 betreffen besonders bevorzugte Möglichkeiten, unterschiedliche Höheninformationen bzw. Höhen in dem Anzeigebild oder in der Anzeigebild-Sequenz darzustellen. Dies erfolgt vorzugsweise durch eine farbliche Unterscheidung jeweils unterschiedlicher Höheninformationen. Insbesondere ist bei unterschiedlichen Höheninformationen ein Unterschied in mindestens einer Farbeigenschaft wie dem Farbton, der Helligkeit oder der Sättigung vorgesehen. Dabei kann ein bestimmter Farbton-, Helligkeits-, und/oder Sättigungswert oder -wertebereich auf die äußere Gestalt, insbesondere geometrische Höhe, eines bestimmten Teilbereichs des Vorfeldbereichs hinweisen und diesen von einem Teilbereich mit einer anderen Gestalt, insbesondere geometrischen Höhe, unterscheiden. Durch entsprechende farbliche Unterschiede lässt sich beispielsweise stehender Gutbestand von einem abgeernteten Bereich des Feldes unterscheiden, da diese Teilbereiche des Vorfeldbereichs eine unterschiedliche geometrische Höhe aufweisen und somit eine unterschiedliche Höhenkontur für diese Teilbereiche des Vorfeldbereichs sensorisch erfasst wird.

Erfindungsgemäß wird eine Bestandskantenerkennung basierend auf den Sensorinformationen durchgeführt, also eine Bestandskante und deren Lage werden erkannt. Die Lage der jeweils erkannten Bestandskante wird dann gemäß dieser Ausgestaltung grafisch hervorgehoben. Handelt es sich bei der Bestandskante um eine seitliche Bestandskante, die also entlang der Fahrtrichtung verläuft, wird hier die Lage der Bestandskante bezogen auf die Richtung quer zur Fahrtrichtung, also die Lage in Breitenrichtung der Arbeitsmaschine bzw. Fahrspur, grafisch hervorgehoben. Grundsätzlich ist es aber auch denkbar, quer zur Fahrtrichtung verlaufende Bestandskanten über die Bestandskantenerkennung zu erkennen und gegebenenfalls auch grafisch hervorzuheben. Eine Bestandskantenerkennung erfolgt beispielsweise durch Vergleich der Sensorinformationen benachbarter Teilbereiche und/oder durch Vergleich von Teilen des Anzeigebilds und/oder der Anzeigebild-Sequenz, die benachbarte Teilbereichen zugeordnet sind, wobei beispielsweise ein Teilbereich durch stehenden Gutbestand und der benachbarte Teilbereich durch einen abgeernteten Feldbereich definiert ist.

Anspruch 5 definiert unterschiedliche Arten von Bestandskanten, die durch die Bestandskantenerkennung ermittelt werden können. Grundsätzlich können auch mehrere Bestandskanten auf die beschriebene Weise erkannt und insbesondere grafisch hervorgehoben werden.

Die Ansprüche 6 und 7 betreffen die Möglichkeit, die jeweils erkannte Bestandskante durch eine Linie, insbesondere eine gerade Linie, grafisch hervorzuheben. Eine solche Linie gibt den Verlauf der Bestandskante wieder. Der Benutzer hat dann vorzugsweise die Möglichkeit, die angezeigte Linie, das heißt die grafisch hervorgehobene Lage der Bestandskante, in dem Anzeigebild oder in der Anzeigebild-Sequenz, beispielsweise im Rahmen einer Korrekturmaßnahme, zu verschieben. Insbesondere kann die jeweilige Linie in eine Richtung quer zu ihrem Verlauf verschoben werden, also ein Parallelversatz zwischen der vorherigen Lage und der späteren Lage der Linie durchgeführt werden.

Um eine solche Linie verschieben zu können, bildet die Linie im Display insbesondere einen virtuellen Schieberegler (Anspruch 8). Besonders bevorzugt handelt es sich bei dem Display um ein Touch-Display, also ein Display, das benutzerseitige Eingaben wie auch ein Verschieben der Linie ermöglicht (Anspruch 9).

Nach der weiter bevorzugten Ausgestaltung gemäß Anspruch 10 kann auf dem Display zusammen mit dem Anzeigebild oder der Anzeigebild-Sequenz auch eine Teilbreitenanzeige grafisch dargestellt werden.

Anspruch 11 beschreibt die Möglichkeit, abhängig von der Lage einer oder mehrerer in dem Anzeigebild oder in der Anzeigebild-Sequenz grafisch hervorgehobener Bestandskanten mindestens eine Steueraktion zu erzeugen. Vorzugsweise kann das Fahrerassistenzsystem eine Kantenführung durchführen. Eine entsprechende Kantenführung kann insbesondere von einem Fahrspurplaner des Fahrerassistenzsystems durchgeführt werden, der beim Entlangfahren der landwirtschaftlichen Arbeitsmaschine auf dem Feld den Verlauf der Fahrspur oder -gasse an der erkannten Bestandskante ausrichtet. Durch Verstellen der im Display angezeigten Linie, die der jeweiligen Bestandskante zugeordnet ist, wird dann bei der Durchführung der Kantenführung, insbesondere durch den Fahrspurplaner, die Fahrspur oder -gasse an der verstellten Linie ausgerichtet. Diese Verstellung der Linie kann dann ausschließlich für die aktuelle Fahrspur oder -gasse oder gegebenenfalls auch für eine oder mehrere weitere, vorzugsweise alle weiteren, Fahrspuren oder -gassen gelten.

Erfindungsgemäß wird in dem Anzeigebild oder in der Anzeigebild-Sequenz auch die maximale Höhe und/oder durchschnittliche Höhe des stehenden Gutbestands in dem Vorfeldbereich der Arbeitsmaschine grafisch hervorgehoben. Auch dies kann durch eine entsprechende Linie, insbesondere eine gerade Linie, erfolgen. Die Linie verläuft dann entlang der in dem Anzeigebild oder in der Anzeigebild-Sequenz visualisierten Höhenkontur des stehenden Gutbestands, also der bezogen auf die vertikale Richtung oberen Kante bzw. Fläche, die von dem Gutbestand gebildet wird.

Nach einer weiteren Lehre gemäß Anspruch 12, der eigenständige Bedeutung zukommt, wird eine selbstfahrende landwirtschaftliche Arbeitsmaschine, insbesondere Erntemaschine, als solche zur Durchführung eines vorschlagsgemäßen Verfahrens beansprucht. Auf alle Ausführungen, die geeignet sind, die Arbeitsmaschine als solche zu beschreiben, darf verwiesen werden.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße selbstfahrende landwirtschaftliche Arbeitsmaschine in einer Seitenansicht,
- Fig. 2: die landwirtschaftliche Arbeitsmaschine gemäß Fig. 1 in einer Ansicht von oben und
- Fig. 3: das Display eines Fahrerassistenzsystems der landwirtschaftlichen Arbeitsmaschine gemäß Fig. 1 in einer ganz schematischen Darstellung.

Die vorschlagsgemäße Lösung lässt sich auf einen weiten Bereich selbstfahrender landwirtschaftlicher Arbeitsmaschinen anwenden. Dazu gehören Erntemaschinen wie Mähdrescher, Feldhäcksler oder dergleichen sowie Zugmaschinen, insbesondere Traktoren. Bei dem dargestellten und insoweit bevorzugten Ausführungsbeispiel handelt es sich bei der landwirtschaftlichen Arbeitsmaschine 1 um einen Mähdrescher, der sich gemäß der Darstellung in den Figu-ren 1 und 2 in einem Ernteprozess befindet.

Die vorschlagsgemäße landwirtschaftliche Arbeitsmaschine 1 ist mit mindestens einem Arbeitsorgan 2-8 ausgestattet. Als Arbeitsorgane weist der Mähdrescher hier und vorzugsweise ein Vorsatzgerät 2 mit einem Schneidwerk 3, einen Fahrantrieb 4, ein Dreschwerk 5, eine Abscheidevorrichtung 6, eine Reinigungsvorrichtung 7 und eine Verteilvorrichtung 8 auf. Die Arbeitsorgane 2-8 dienen jeweils zur Durchführung oder Unterstützung landwirtschaftlicher Arbeit in einem Feld.

Die vorschlagsgemäße landwirtschaftliche Arbeitsmaschine 1 ist ferner mit einem Fahrerassistenzsystem 9 zum Erzeugen von Steueraktionen innerhalb der Arbeitsmaschine 1 ausgestattet. Die Steueraktionen können einerseits die Ansteuerung und Parametrierung der Arbeitsorgane 2-8 betreffen und beispielsweise Lenkbewegungen der landwirtschaftlichen Arbeitsmaschine und/oder Höhen- oder Querverstellungen von Arbeitsorganen der landwirtschaftlichen Arbeitsmaschine umfassen und andererseits die Anzeige von Informationen für den Benutzer betreffen.

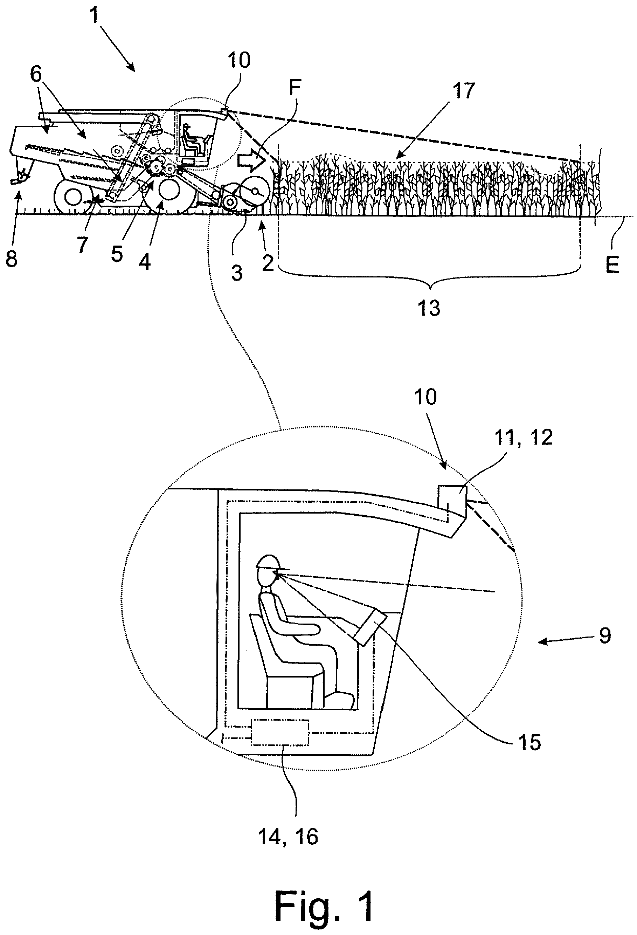

Weiter weist das Fahrerassistenzsystem 9 eine Sensoranordnung 10 zur Erzeugung von Vorfeldinformationen auf, wobei das Fahrerassistenzsystem 9 die Steueraktionen basierend auf den Vorfeldinformationen erzeugt. Die Sensoranordnung 10 weist ein laserbasiertes Sensorsystem 11, hier beispielsweise ein auf einem LIDAR-Sensor basierendes Sensorsystem 11, und gegebenenfalls ein optionales kamerabasiertes Sensorsystem 12 auf, die beide jeweils an der Arbeitsmaschine 1, vorzugsweise in einer gegenüber der Feldebene E erhöhten Position, angeordnet sind. Jedenfalls das laserbasierte Sensorsystem 11, gegebenenfalls auch das optionale kamerabasierte Sensorsystem 12, erzeugt jeweils Sensorinformationen zu einem vorbestimmten, relevanten Vorfeldbereich 13 der Arbeitsmaschine 1. Vorzugsweise erzeugt die Sensoranordnung 10 basierend auf den Sensorinformationen jedenfalls des laserbasierten Sensorsystems 11 die Vorfeldinformationen oder die Sensorinformationen jedenfalls des laserbasierten Sensorsystems 11 bilden zumindest einen Teil der Vorfeldinformationen. In dem dargestellten und insoweit bevorzugten Ausführungsbeispiel ist der relevante Vorfeldbereich 13 als ein Bereich vorbestimmter Form und Größe definiert, der in Fahrtrichtung F vor der Arbeitsmaschine 1 liegt. In Fig. 1 ist der Vorfeldbereich 13 als ein rechteckiger Bereich vor der Arbeitsmaschine 1 dargestellt.

Wesentlich ist nun, dass das Fahrerassistenzsystem 9 ein Bildverarbeitungssystem 14 zur Verarbeitung der Sensorinformationen aufweist und dass von dem Bildverarbeitungssystem 14 basierend auf den Sensorinformationen des laserbasierten Sensorsystems 11 auf einem Display 15 des Fahrerassistenzsystems 9 ein Anzeigebild A oder eine Anzeigebild-Sequenz in Form einer dreidimensionalen Visualisierung des vorbestimmten, relevanten Vorfeldbereichs 13 der Arbeitsmaschine 1 erzeugt wird.

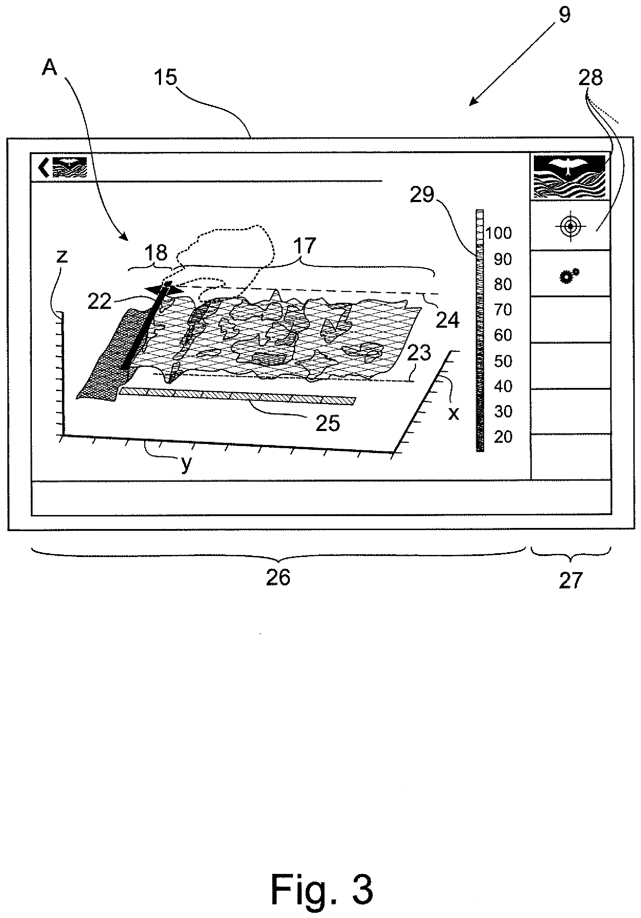

Die Sensorinformationen des laserbasierten Sensorsystems 11 werden also von dem Bildverarbeitungssystem 14, das hier von einer Rechenvorrichtung 16 des Fahrerassistenzsystems 9 bereitgestellt wird, so verarbeitet, dass auf dem Display 15 mit grafischen Mitteln ein räumlich wirkendes Abbild des Vorfeldbereichs 13 erzeugt wird. Das jeweilige Anzeigebild A, beispielsweise auch jedes Anzeigebild A der Anzeigebild-Sequenz, gibt den vom Sensorsystem 11 erfassten Vorfeldbereich 13 somit in den drei Raumdimensionen "Länge", "Breite" und "Höhe" grafisch wieder, wie dies in Fig. 3 schematisch dargestellt ist. Zusätzlich zu dem jeweiligen Anzeigebild A, also der dreidimensionalen Visualisierung des Vorfeldbereichs 13, werden auf dem Display 15 Koordinatenachsen x, y, z für die Raumdimensionen "Länge", "Breite" und "Höhe" dargestellt. Die Koordinatenachse x ist dabei der Raumdimension "Länge" zugeordnet. Die Koordinatenachse y ist der Raumdimension "Breite" zugeordnet und die Koordinatenachse z ist der Raumdimension "Höhe" zugeordnet. Die Koordinatenachsen x, y, z, innerhalb derer das Anzeigebild A dargestellt und/oder zu denen das Anzeigebild A ausgerichtet wird, weisen hier beispielsweise eine Maßteilung in Metern auf.

Die Sensorinformationen des laserbasierten Sensorsystems 11 umfassen hier und vorzugsweise auf die Feldebene E bezogene Höheninformationen oder sind auf die Feldebene E bezogene Höheninformationen. Die Feldebene E, also die Ebene, auf der die landwirtschaftliche Arbeitsmaschine entlangfährt, ist die Referenzfläche, auf die die geometrische Höhe der sensorisch erfassten Objekte bezogen ist. Die der geometrischen Höhe entsprechenden Daten werden als Höheninformationen bezeichnet.

Um unterschiedliche Höhen der mittels des laserbasierten Sensorsystems 11 im Vorfeldbereich 13 erfassten Objekte, insbesondere Pflanzen oder Pflanzenteile, im Anzeigebild A bzw. der Anzeigebild-Sequenz auf einfache Weise unterscheiden zu können und um insbesondere die Grenzen zwischen benachbarten Teilbereichen des Vorfeldbereichs 13 mit unterschiedlicher Höhe feststellen zu können, ist es hier und vorzugsweise ferner so, dass in dem Anzeigebild A oder in der Anzeigebild-Sequenz unterschiedliche auf die Feldebene E bezogene Höheninformationen, die von dem laserbasierten Sensorsystem 11 erzeugt werden, von dem Bildverarbeitungssystem 14 farblich unterschiedlich dargestellt werden.

Farblich unterschiedlich meint, dass mindestens eine Farbeigenschaft wie Farbton, Helligkeit und Sättigung für unterschiedliche Höhen unterschiedlich ist. Dabei ist in dem Anzeigebild A oder in der Anzeigebild-Sequenz insbesondere ein Farbton-, Helligkeits- und/oder Sättigungswert oder -wertebereich durch die Existenz einer bestimmten äußeren Gestalt eines Teilbereichs des Vorfeldbereichs 13 definiert, da die äußere Gestalt des Teilbereichs des Vorfeldbereichs 13 von den geometrischen Höhen der Objekte, insbesondere der Pflanzen oder Pflanzenteile, in diesem Teilbereich abhängt. So unterscheidet sich stehender Gutbestand 17 grundsätzlich in seiner geometrischen Höhe von einem abgeernteten Bereich 18 des Feldes, der Pflanzenteile in Form von Stoppeln aufweisen kann. Dadurch weist im Anzeigebild A oder in der Anzeigebild-Sequenz die dreidimensionale Visualisierung des stehenden Gutbestands 17 auf dem Display 15 beispielsweise einen anderen Farbton, eine andere Helligkeit und/oder eine andere Sättigung als die dreidimensionale Visualisierung des abgeernteten Bereichs 18 des Feldes auf.

Insbesondere ist es hierbei denkbar, dass in dem Anzeigebild A oder in der Anzeigebild-Sequenz
- ein Farbton-, Helligkeits- und/oder Sättigungswert oder -wertebereich durch die Existenz stehenden Gutbestands 17 definiert ist und/oder
- ein Farbton-, Helligkeits- und/oder Sättigungswert oder -wertebereich durch die Existenz eines abgeernteten Bereichs 18 des Feldes definiert ist und/oder
- ein Farbton-, Helligkeits- und/oder Sättigungswert oder -wertebereich durch die Existenz liegenden Gutbestands definiert ist und/oder
- ein Farbton-, Helligkeits- und/oder Sättigungswert oder -wertebereich durch die Existenz einer Fahrspur 19 definiert ist und/oder
- ein Farbton-, Helligkeits- und/oder Sättigungswert oder -wertebereich durch die Existenz einer Spritzspur definiert ist und/oder
- ein Farbton-, Helligkeits- und/oder Sättigungswert oder -wertebereich durch die Existenz eines Vorgewendes definiert ist und/oder
- ein Farbton-, Helligkeits- und/oder Sättigungswert oder -wertebereich durch die Existenz eines an das Feld angrenzenden Bereichs 20 definiert ist und/oder
- ein Farbton-, Helligkeits- und/oder Sättigungswert oder -wertebereich durch die Existenz eines Hindernisses definiert ist.

Wie Fig. 3 zeigt, wird hier von dem Bildverarbeitungssystem 14 basierend auf der Sensorinformation des laserbasierten Sensorsystems 11 und/oder basierend auf dem Anzeigebild A oder der Anzeigebild-Sequenz ferner eine Bestandskantenerkennung durchgeführt. Hierbei werden beispielsweise die Sensorinformationen, die benachbarten Teilbereichen des Vorfeldbereichs 13 zugeordnet sind, miteinander verglichen. Zusätzlich oder alternativ können auch Teile des Anzeigebilds A und/oder der Anzeigebild-Sequenz, die unterschiedlichen Teilbereichen des Vorfeldbereichs 13 zugeordnet sind, miteinander verglichen werden. Insbesondere können in diesem Zusammenhang den entsprechenden Teilbereichen zugeordnete Farbton-, Helligkeits- und/oder Sättigungswerte oder -wertebereiche miteinander verglichen werden. Durch im Rahmen dieses Vergleichs ermittelte Unterschiede lässt sich dann auf die Existenz einer Bestandskante 21 schließen. In dem Anzeigebild A oder in der Anzeigebild-Sequenz wird die Lage einer im Rahmen der Bestandskantenerkennung erkannte Bestandskante 21 dann grafisch hervorgehoben, wie dies in Fig. 3 gezeigt ist. Da es sich bei dem vorliegenden Ausführungsbeispiel um eine seitliche, also entlang der Fahrtrichtung F verlaufende Bestandskante 21 handelt, wird in dem Anzeigebild A oder in der Anzeigebild-Sequenz die Lage bezogen auf die Richtung quer zur Fahrtrichtung F grafisch hervorgehoben.

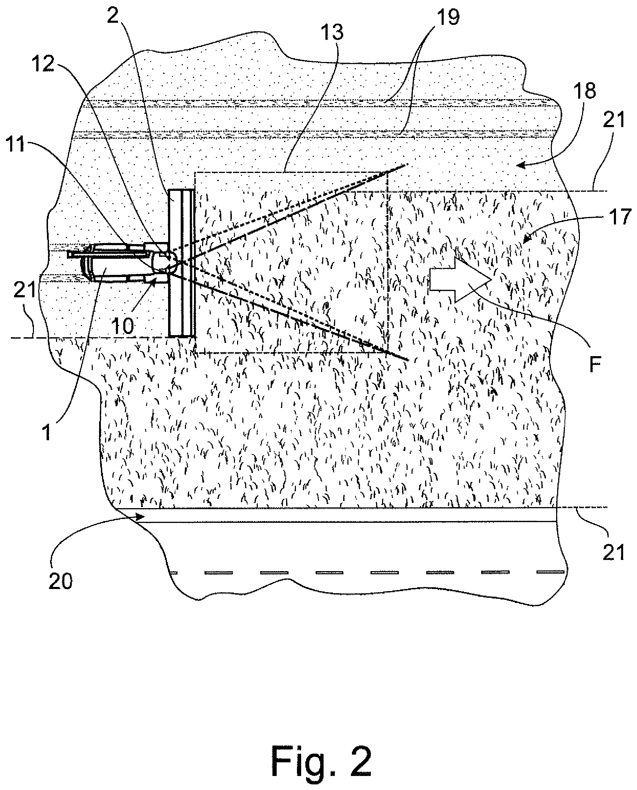

Von dem Bildverarbeitungssystem 14 wird im Rahmen der Bestandskantenerkennung auch die Lage, insbesondere bezogen auf die Richtung quer zur Fahrtrichtung F, unterschiedlicher Bestandskanten 21 grafisch hervorgehoben. Verschiedene Bestandskanten 21 sind beispielhaft in Fig. 2 dargestellt. Beispielsweise kann als Bestandskante 21 die Grenze zwischen dem stehenden Gutbestand 17 und einem abgeernteten Bereich 18 des Feldes erkannt und insbesondere grafisch hervorgehoben werden. Dies ist grundsätzlich auch denkbar für die Grenze zwischen dem stehenden Gutbestand 17 und dem an das Feld angrenzenden Bereich 20, wobei die Bestandskante 21 hier die Feldbegrenzung ist. Auch ist dies denkbar für die Grenze zwischen dem stehenden Gutbestand und einem Vorgewende, wobei die Bestandskante 21 dann die Vorgewendekante ist. Ebenfalls vorstellbar ist dies für die Grenze zwischen dem stehenden Gutbestand 17 und einem liegenden Gutbestand und/oder für die Grenze zwischen dem stehenden Gutbestand 17 und einer Spritzspur, also einer Fahrspur im stehenden Gutbestand 17. Die jeweilige Grenze definiert also die Bestandskante 21.

Wie Fig. 3 zeigt, wird bei dem hier dargestellten und insoweit bevorzugten Ausführungsbeispiel von dem Bildverarbeitungssystem 14 die auf die Richtung quer zur Fahrtrichtung bezogene Lage der jeweiligen Bestandskante 21 durch eine Linie 22, insbesondere eine gerade Linie 22, grafisch hervorgehoben, die entlang der in dem Anzeigebild A oder in der Anzeigebild-Sequenz visualisierten Bestandskante 21 verläuft. Bei der Bestandskante 21 handelt es sich hier um eine seitliche Bestandskante 21, und zwar zwischen dem stehenden Gutbestand 17 und einem abgeernteten Bereich 18 des Feldes. Grundsätzlich kann aber auch jede andere der genannten Bestandskanten 21 durch eine Linie 22, insbesondere eine gerade Linie 22, auf die beschriebene Weise grafisch hervorgehoben werden.

In einer besonders bevorzugten Ausgestaltung ist die jeweilige Linie 22, insbesondere die der seitlichen Bestandskante 21 zugeordnete Linie 22, benutzerseitig in dem Anzeigebild A oder in der Anzeigebild-Sequenz verschiebbar. Die Linie 22 bildet hier und vorzugsweise einen virtuellen Schieberegler, der vom Benutzer (in Fig. 3 gestrichelt dargestellt) in dem Anzeigebild A oder in der Anzeigebild-Sequenz verschoben werden kann. Das Display 15 ist zu diesem Zweck hier und vorzugsweise als ein Touch-Display 15 ausgestaltet.

Durch Verschieben der Linie 22, was in Fig. 3 durch Pfeile dargestellt ist, kann eine individuelle Anpassung des Fahrerassistenzsystems 9 und der davon zu erzeugenden Steueraktionen erfolgen. Soll beispielsweise bei einem Erntevorgang die Arbeitsbreite des Vorsatzgerätes 2 seitlich über den stehenden Gutbestand 17 etwas hinausgehen und mit dem abgeernteten Bereich 18 des Feldes etwas überlappen, kann die Linie 22 zu diesem Zweck von der in Fig. 3 gezeigten Position, die auf der Bestandskante 21 liegt, etwas nach links verschoben werden. Das Fahrerassistenzsystem 9 wird sich dann bei der weiteren Bearbeitung an der neuen Position der Linie 22 orientieren.

Hier und vorzugsweise ist auf dem Display 15 zusammen mit dem Anzeigebild A oder der Anzeigebild-Sequenz auch eine Teilbreitenanzeige 25 grafisch darstellbar. Die grafisch dargestellte Teilbreitenanzeige 25 kann dabei mit dem Anzeigebild A oder der Anzeigebild-Sequenz überlappen. Die Teilbreitenanzeige 25 gibt dem Benutzer eine weitere Möglichkeit der Überprüfung des Arbeitsergebnisses.

Das Fahrerassistenzsystem 9 erzeugt hier und vorzugsweise mindestens eine Steueraktion abhängig von der Lage einer oder mehrerer in dem Anzeigebild A oder in der Anzeigebild-Sequenz grafisch hervorgehobenen Bestandskanten 21, insbesondere abhängig von der Lage der jeweiligen Linie 22 in dem Anzeigebild A oder in der Anzeigebild-Sequenz. Besonders bevorzugt ist das Fahrerassistenzsystem 9 in der Lage, eine Kantenführung durchzuführen, bei der sich das Fahrerassistenzsystem 9 zur Erzeugung der Steueraktion an der oder den grafisch hervorgehobenen Bestandskanten 21, insbesondere an der Lage der jeweiligen Linie 22, orientiert. Beispielsweise kann die Steueraktion das Ausführen von Lenkbewegungen der landwirtschaftlichen Arbeitsmaschine 1 und/oder das Querverstellen eines Arbeitsorgans, insbesondere Vorsatzgeräts 2, der landwirtschaftlichen Arbeitsmaschine 1 umfassen. Dies ist beispielsweise für den beschriebenen Fall vorteilhaft, bei dem während eines Erntevorgangs, wie er in den Figuren 2 und 3 dargestellt ist, die Arbeitsbreite des Vorsatzgerätes 2 seitlich über den stehenden Gutbestand 17 hinausgehen soll. Dazu kann die Linie 22 wie beschrieben von der in Fig. 3 gezeigten Position etwas nach links verschoben werden, worauf sich das Fahrerassistenzsystem 9 dann an der neuen Position der Linie 22 orientiert.

Weiter ist vorgesehen, dass in dem Anzeigebild A oder in der Anzeigebild-Sequenz die maximale Höhe und/oder die durchschnittliche Höhe des stehenden Gutbestands 17 in dem vorbestimmten, relevanten Vorfeldbereich 13 grafisch hervorgehoben wird. Dies erfolgt hier und vorzugsweise jeweils durch eine weitere Linie 23, 24, insbesondere eine gerade Linie 23, 24, die jeweils entlang der in dem Anzeigebild A oder in der Anzeigebild-Sequenz visualisierten Höhenkontur des stehenden Gutbestands 17 verläuft. Die Linie 23 zeigt dabei die maximale Höhe und die Linie 24 die durchschnittliche Höhe an.

Fig. 3 zeigt schließlich auch, dass das Display 15 mehrere Anzeigebereiche 26, 27 darstellen kann, wobei hier und vorzugsweise in einem ersten Anzeigebereich 26 das Anzeigebild A oder die Anzeigebild-Sequenz und insbesondere die Koordinatenachsen x, y, z dargestellt werden und wobei in einem zweiten Anzeigebereich 27 virtuelle Bedienelemente 28 zur Vornahme von Einstellungen des Fahrerassistenzsystems 9, insbesondere der Sensoranordnung 10, des Bildverarbeitungssystems 14, des Displays 15 und/oder der Rechenvorrichtung 16, dargestellt werden. Hier ist ferner in dem ersten Anzeigebereich 26 eine Skala 29 vorgesehen, in der bestimmten Farbtönen, die in dem jeweiligen Anzeigenbild A verwendet werden oder verwendet werden können, jeweils ein Wert für die geometrische Höhe zugeordnet ist. Die Skala 29 weist hier beispielsweise eine Maßteilung in Zentimetern auf.

Nach einer weiteren Lehre, der eigenständige Bedeutung zukommt, wird die selbstfahrende landwirtschaftliche Arbeitsmaschine 1 zur Durchführung eines oben erläuterten, vorschlagsgemäßen Verfahrens als solche beansprucht. Auf alle diesbezüglichen Ausführungen darf verwiesen werden.

### Bezugszeichenliste

- 1: Arbeitsmaschine
- 2-8: Arbeitsorgane
- 9: Fahrerassistenzsystem
- 10: Sensoranordnung
- 11: laserbasiertes Sensorsystem
- 12: kamerabasiertes Sensorsystem
- 13: relevanter Vorfeldbereich
- 14: Bildverarbeitungssystem
- 15: Display
- 16: Rechenvorrichtung
- 17: stehender Gutbestand
- 18: abgeernteter Bereich des Feldes
- 19: Fahrspur
- 20: an das Feld angrenzender Bereich
- 21: Bestandskante
- 22-24: Linien
- 25: Teilbreitenanzeige
- 26, 27: Anzeigebereiche
- 28: virtuelle Bedienelemente
- 29: Skala
- A: Anzeigebild
- E: Feldebene
- F: Fahrtrichtung
- x, y, z: Koordinatenachsen

## Patentansprüche

1. Verfahren für den Betrieb einer selbstfahrenden landwirtschaftlichen Arbeitsmaschine (1), insbesondere Erntemaschine,
wobei die landwirtschaftliche Arbeitsmaschine (1) mindestens ein Arbeitsorgan (2-8) zur Durchführung oder Unterstützung landwirtschaftlicher Arbeit in einem Feld aufweist,
wobei die landwirtschaftliche Arbeitsmaschine (1) ein Fahrerassistenzsystem (9) zum Erzeugen von Steueraktionen innerhalb der Arbeitsmaschine (1) aufweist,
wobei das Fahrerassistenzsystem (9) eine Sensoranordnung (10) zur Erzeugung von Vorfeldinformationen aufweist,
wobei das Fahrerassistenzsystem (9) die Steueraktionen basierend auf den Vorfeldinformationen erzeugt,
wobei die Sensoranordnung (10) ein laserbasiertes Sensorsystem (11) aufweist, das Sensorinformationen zu einem vorbestimmten, relevanten Vorfeldbereich (13) der Arbeitsmaschine (1) erzeugt,
wobei das Fahrerassistenzsystem (9) ein Bildverarbeitungssystem (14) zur Verarbeitung der Sensorinformationen aufweist,
wobei von dem Bildverarbeitungssystem (14) basierend auf den Sensorinformationen des laserbasierten Sensorsystems (11) auf einem Display (15) des Fahrerassistenzsystems (9) ein Anzeigebild (A) oder eine Anzeigebild-Sequenz in Form einer dreidimensionalen Visualisierung des vorbestimmten, relevanten Vorfeldbereichs (13) der Arbeitsmaschine (1) erzeugt wird,
**dadurch gekennzeichnet,**
**dass** von dem Bildverarbeitungssystem (14) basierend auf den Sensorinformationen des laserbasierten Sensorsystems (11) und/oder basierend auf dem Anzeigebild (A) oder der Anzeigebild-Sequenz eine Bestandskantenerkennung durchgeführt wird, und dass in dem Anzeigebild (A) oder in der Anzeigebild-Sequenz, insbesondere bezogen auf die Richtung quer zur Fahrtrichtung (F), die Lage einer im Rahmen der Bestandskantenerkennung erkannten Bestandskante (21) grafisch hervorgehoben wird, und
**dass** in dem Anzeigebild (A) oder in der Anzeigebild-Sequenz die maximale Höhe und/oder die durchschnittliche Höhe des stehenden Gutbestands (17) in dem vorbestimmten, relevanten Vorfeldbereich (13) der Arbeitsmaschine (1) grafisch hervorgehoben wird, vorzugsweise, dass die durchschnittliche Höhe und/oder die maximale Höhe des stehenden Gutbestands (17) durch eine Linie (23, 24), insbesondere eine gerade Linie (23, 24), die entlang der in dem Anzeigebild (A) oder in der Anzeigebild-Sequenz visualisierten Höhenkontur des stehenden Gutbestands (17) verläuft, grafisch hervorgehoben wird.

2. Verfahren nach Anspruch 1, **dadurch gekennzeichnet, dass** die Sensorinformationen des laserbasierten Sensorsystems (11) bezogen auf die Feldebene (E) Höheninformationen umfassen oder Höheninformationen sind.

3. Verfahren nach Anspruch 1 oder 2, **dadurch gekennzeichnet, dass** in dem Anzeigebild (A) oder in der Anzeigebild-Sequenz unterschiedliche auf die Feldebene (E) bezogene Höheninformationen, die von dem laserbasierten Sensorsystem (11) erzeugt werden, von dem Bildverarbeitungssystem (14) farblich unterschiedlich dargestellt werden.

4. Verfahren nach einem der vorhergehenden Ansprüche, **dadurch gekennzeichnet, dass** in dem Anzeigebild (A) oder in der Anzeigebild-Sequenz
- ein Farbton-, Helligkeits- und/oder Sättigungswert oder -wertebereich durch die Existenz stehenden Gutbestands (17) definiert ist und/oder
- ein Farbton-, Helligkeits- und/oder Sättigungswert oder -wertebereich durch die Existenz eines abgeernteten Bereichs (18) des Feldes definiert ist und/oder
- ein Farbton-, Helligkeits- und/oder Sättigungswert oder -wertebereich durch die Existenz liegenden Gutbestands definiert ist und/oder
- ein Farbton-, Helligkeits- und/oder Sättigungswert oder -wertebereich durch die Existenz einer Fahrspur (19) definiert ist und/oder
- ein Farbton-, Helligkeits- und/oder Sättigungswert oder -wertebereich durch die Existenz einer Spritzspur definiert ist und/oder
- ein Farbton-, Helligkeits- und/oder Sättigungswert oder -wertebereich durch die Existenz eines Vorgewendes definiert ist und/oder
- ein Farbton-, Helligkeits- und/oder Sättigungswert oder -wertebereich durch die Existenz eines an das Feld angrenzenden Bereichs (20) definiert ist und/oder
- ein Farbton-, Helligkeits- und/oder Sättigungswert oder -wertebereich durch die Existenz eines Hindernisses definiert ist.

5. Verfahren nach einem der vorhergehenden Ansprüche, **dadurch gekennzeichnet, dass** von dem Bildverarbeitungssystem (14) im Rahmen der Bestandskantenerkennung bezogen auf die Richtung quer zur Fahrtrichtung (F) die Lage
- der Grenze zwischen dem stehenden Gutbestand (17) und einem abgeernteten Bereich (18) des Feldes und/oder
- der Grenze zwischen dem stehenden Gutbestand (17) und dem an das Feld angrenzenden Bereich (20) und/oder
- der Grenze zwischen dem stehenden Gutbestand (17) und dem Vorgewende und/oder
- der Grenze zwischen dem stehenden Gutbestand (17) und einem liegenden Gutbestand und/oder
- der Grenze zwischen dem stehenden Gutbestand (17) und einer Spritzspur erkannt und insbesondere grafisch hervorgehoben wird.

6. Verfahren nach einem der vorhergehenden Ansprüche, **dadurch gekennzeichnet, dass** von dem Bildverarbeitungssystem (14) bezogen auf die Richtung quer zur Fahrtrichtung (F) die Lage der jeweiligen Bestandskante (21) durch eine Linie (22), insbesondere eine gerade Linie (22), die entlang der in dem Anzeigebild (A) oder in der Anzeigebild-Sequenz visualisierten Bestandskante (21) verläuft, grafisch hervorgehoben wird.

7. Verfahren nach Anspruch 6, **dadurch gekennzeichnet, dass** die jeweilige Linie (22) benutzerseitig in dem Anzeigebild (A) oder in der Anzeigebild-Sequenz verschiebbar ist.

8. Verfahren nach einem der Ansprüche 6 oder 7, **dadurch gekennzeichnet, dass** die Linie (22) einen virtuellen Schieberegler bildet.

9. Verfahren nach einem der vorhergehenden Ansprüche, **dadurch gekennzeichnet, dass** das Display (15) ein Touch-Display (15) ist.

10. Verfahren nach einem der vorhergehenden Ansprüche, **dadurch gekennzeichnet, dass** auf dem Display (15) zusammen mit dem Anzeigebild (A) oder der Anzeigebild-Sequenz eine Teilbreitenanzeige (25) grafisch darstellbar ist oder dargestellt wird, vorzugsweise, dass die grafisch dargestellte Teilbreitenanzeige (25) in dem Display (15) mit dem Anzeigebild (A) oder der Anzeigebild-Sequenz überlappt.

11. Verfahren nach einem der vorhergehenden Ansprüche, **dadurch gekennzeichnet, dass** das Fahrerassistenzsystem (9) mindestens eine Steueraktion abhängig von der Lage einer oder mehrerer in dem Anzeigebild (A) oder in der Anzeigebild-Sequenz grafisch hervorgehobenen Bestandskanten (21), insbesondere abhängig von der Lage der jeweiligen Linie (22) in dem Anzeigebild (A) oder in der Anzeigebild-Sequenz, erzeugt, vorzugsweise, dass das Fahrerassistenzsystem (9) eine Kantenführung durchführt, und/oder, dass die Steueraktion das Ausführen von Lenkbewegungen der landwirtschaftlichen Arbeitsmaschine (1) und/oder das Querverstellen eines Arbeitsorgans, insbesondere Vorsatzgeräts (2), der landwirtschaftlichen Arbeitsmaschine (1) umfasst.

12. Selbstfahrende landwirtschaftliche Arbeitsmaschine, wobei die landwirtschaftliche Arbeitsmaschine (1) mindestens ein Arbeitsorgan (2-8) zur Durchführung oder Unterstützung landwirtschaftlicher Arbeit in einem Feld aufweist,
wobei die landwirtschaftliche Arbeitsmaschine (1) ein Fahrerassistenzsystem (9) zum Erzeugen von Steueraktionen innerhalb der Arbeitsmaschine (1) aufweist,
wobei das Fahrerassistenzsystem (9) eine Sensoranordnung (10) zur Erzeugung von Vorfeldinformationen aufweist,
wobei das Fahrerassistenzsystem (9) die Steueraktionen basierend auf den Vorfeldinformationen erzeugt,
wobei die Sensoranordnung (10) ein laserbasiertes Sensorsystem (11) aufweist, das Sensorinformationen zu einem vorbestimmten, relevanten Vorfeldbereich (13) der Arbeitsmaschine (1) erzeugt,
wobei die landwirtschaftliche Arbeitsmaschine (1) zur Durchführung eines Verfahrens nach Anspruch 1 vorgesehen und eingerichtet ist.

## Claims

1. A method for operating a self-propelled agricultural working machine (1), in particular a harvesting machine,
wherein the agricultural working machine (1) has at least one working unit (2-8) for carrying out or supporting agricultural work in a field,
wherein the agricultural working machine (1) has a driver assistance system (9) for generating control actions within the working machine (1),
wherein the driver assistance system (9) has a sensor assembly (10) for generating frontal field information,
wherein the driver assistance system (9) generates the control actions on the basis of the frontal field information,
wherein the sensor assembly (10) has a laser-based sensor system (11) which generates sensor information in respect of a predetermined, relevant frontal field region (13) of the working machine (1),
wherein the driver assistance system (9) has an image processing system (14) for processing the sensor information, wherein, on the basis of the sensor information from the laser-based sensor system (11), a displayed image (A) or a displayed image sequence is generated by the image processing system (14) on a display (15) of the driver assistance system (9) in the form of a three-dimensional visualisation of the predetermined, relevant frontal field region (13) of the working machine (1), **characterized in that**
a field crop edge detection is carried out by the image processing system (14) on the basis of the sensor information from the laser-based sensor system (11) and/or on the basis of the displayed image (A) or the displayed image sequence, and **in that** the position of a field crop edge (21) detected in the context of the field crop edge detection (21) is graphically accentuated in the displayed image (A) or in the displayed image sequence, in particular with respect to the direction transverse to the direction of travel (F), and
**in that** the maximum height and/or the mean height of the standing field crop (17) in the predetermined, relevant frontal field region (13) of the working machine (1) is graphically accentuated in the displayed image (A) or in the displayed image sequence, preferably **in that** the mean height and/or the maximum height of the standing field crop (17) is graphically accentuated by a line (23, 24), in particular a straight line (23, 24), which extends along the height contour of the standing field crop (17) visualised in the displayed image (A) or in the displayed image sequence.

2. The method according to claim 1, **characterized in that** the sensor information from the laser-based sensor system comprises, or is, height information with respect to the plane of the field (E).

3. The method according to claim 1 or claim 2, **characterized in that** different height information with respect to the plane of the field (E) which is generated by the laser-based sensor system (11) is depicted in different colours in the displayed image (A) or in the displayed image sequence.

4. The method according to one of the preceding claims, **characterized in that** in the displayed image (A) or in the displayed image sequence,
- a colour value, brightness value and/or saturation value or range of values is defined by the existence of standing field crop (17), and/or
- a colour value, brightness value and/or saturation value or range of values is defined by the existence of a harvested region (18) of the field, and/or
- a colour value, brightness value and/or saturation value or range of values is defined by the existence of lying field crop, and/or
- a colour value, brightness value and/or saturation value or range of values is defined by the existence of a drive track (19), and/or
- a colour value, brightness value and/or saturation value or range of values is defined by the existence of a spray track, and/or
- a colour value, brightness value and/or saturation value or range of values is defined by the existence of a headland, and/or
- a colour value, brightness value and/or saturation value or range of values is defined by the existence of a region (20) bordering the field, and/or
- a colour value, brightness value and/or saturation value or range of values is defined by the existence of an obstacle.

5. The method according to one of the preceding claims, **characterized in that** in the context of the field crop edge detection, the position with respect to the direction transverse to the direction of travel (F):
- of the boundary between the standing field crop (17) and a harvested region (18) of the field, and/or
- of the boundary between the standing field crop (17) and the region (20) adjoining the field, and/or
- of the boundary between the standing field crop (17) and the headland, and/or
- of the boundary between the standing field crop (17) and a lying field crop, and/or
- of the boundary between the standing field crop (17) and a spray track,
is detected and in particular graphically accentuated by the image processing system (14).

6. The method according to one of the preceding claims, **characterized in that**, with respect to the direction transverse to the direction of travel (F), the position of the respective field crop edge (21) is graphically accentuated by the image processing system (14) by a line (22), in particular a straight line (22), which extends along the field crop edge (21) visualised in the displayed image (A) or in the displayed image sequence.

7. The method according to claim 6, **characterized in that** the respective line (22) can be displaced in the displayed image (A) or in the displayed image sequence by the user.

8. The method according to claim 6 or claim 7, **characterized in that** the line (22) forms a virtual slider.

9. The method according to one of the preceding claims, **characterized in that** the display (15) is a touch display (15).

10. The method according to one of the preceding claims, **characterized in that** a part-width indicator (25) can be, or is, graphically depicted on the display (15) together with the displayed image (A) or the displayed image sequence, preferably in that in the display (15), the graphically depicted part-width indicator (25) overlaps the displayed image (A) or the displayed image sequence.

11. The method according to one of the preceding claims, **characterized in that** the driver assistance system (9) generates at least one control action as a function of the position of one or more field crop edges (21) graphically accentuated in the displayed image (A) or in the displayed image sequence, in particular as a function of the position of the respective line (22) in the displayed image (A) or in the displayed image sequence, preferably **in that** the driver assistance system (9) executes an edge guidance, and/or **in that** the control action comprises carrying out steering movements of the agricultural working machine (1) and/or the transverse adjustment of a working unit, in particular a front attachment (2), of the agricultural working machine (1).

12. A self-propelled agricultural working machine, wherein the agricultural working machine (1) has at least one working unit (2-8) for carrying out or supporting agricultural work in a field, wherein the agricultural working machine (1) has a driver assistance system (9) for generating control actions within the working machine (1),
wherein the driver assistance system (9) has a sensor assembly (10) for generating frontal field information,
wherein the driver assistance system (9) generates the control actions on the basis of the frontal field information, wherein the sensor assembly (10) has a laser-based sensor system (11) which generates sensor information in respect of a predetermined, relevant frontal field region (13) of the working machine (1),
wherein the agricultural working machine (1) is provided and configured for carrying out a method according to claim 1.

## Revendications

1. Procédé de fonctionnement d'un engin agricole (1) automoteur, notamment d'une machine de récolte,
selon lequel l'engin agricole (1) présente au moins un organe de travail (2-8) pour l'exécution ou l'assistance d'une tâche agricole dans un champ,
selon lequel l'engin agricole (1) présente un système d'assistance au conducteur (9) destiné à générer des actions de commande à l'intérieur de l'engin (1),
selon lequel le système d'assistance au conducteur (9) présente un dispositif à capteur (10) destiné à générer des informations de « champ devant »,
selon lequel le système d'assistance au conducteur (9) génère les actions de commande sur la base des informations de champ devant,
selon lequel le dispositif à capteur (10) présente un système de capteur (11) à base de laser qui génère des informations de capteur concernant une zone de champ devant (13) prédéfinie pertinente de l'engin (1),
selon lequel le système d'assistance au conducteur (9) présente un système de traitement d'images (14) destiné à traiter les informations de capteur,
selon lequel le système de traitement d'images (14) génère, sur un écran (15) du système d'assistance au conducteur (9), une image d'affichage (A) ou une séquence d'images d'affichage sous la forme d'une visualisation tridimensionnelle de la zone de champ devant (13) prédéfinie pertinente de l'engin (1), sur la base des informations de capteur du système de capteur (11) à base de laser,
**caractérisé en ce que**
sur la base des informations de capteur du système de capteur (11) à base de laser et/ou sur la base de l'image d'affichage (A) ou de la séquence d'images d'affichage, le système de traitement d'images (14) effectue une détection de limite de culture, et **en ce que** dans l'image d'affichage (A) ou dans la séquence d'images d'affichage, l'emplacement d'une limite de culture (21) identifiée dans le cadre de la détection de limite de culture, notamment par rapport à la direction perpendiculaire à la direction de déplacement (F), est mis en avant par des moyens graphiques, et
**en ce que** dans l'image d'affichage (A) ou dans la séquence d'images d'affichage, la hauteur maximale et/ou la hauteur moyenne des végétaux debout (17) dans la zone champ devant (13) prédéfinie pertinente de l'engin (1) est mise en avant par des moyens graphiques, de préférence en ce que la hauteur moyenne et/ou la hauteur maximale des végétaux debout (17) est mise en avant graphiquement par une ligne (23, 24), notamment une ligne droite (23, 24), qui s'étend le long du contour de hauteur des végétaux debout (17) visualisé dans l'image d'affichage (A) et/ou dans la séquence d'images d'affichage.

2. Procédé selon la revendication 1, **caractérisé en ce que** les informations de capteur du système de capteur (11) à base de laser comprennent des informations de hauteur par rapport au plan du champ (E) ou sont des informations de hauteur.

3. Procédé selon la revendication 1 ou 2, **caractérisé en ce que** dans l'image d'affichage (A) ou dans la séquence d'images d'affichage, des informations de hauteur différentes par rapport au plan du champ (E), générées par le système de capteur (11) à base de laser, sont représentées avec des couleurs différentes par le système de traitement d'images (14).

4. Procédé selon une des revendications précédentes, **caractérisé en ce que** dans l'image d'affichage (A) ou dans la séquence d'images d'affichage,
- une valeur ou une gamme de valeurs de teinte, de luminosité et/ou de saturation est définie par l'existence de végétaux debout (17), et/ou
- une valeur ou une gamme de valeurs de teinte, de luminosité et/ou de saturation est définie par l'existence d'une zone récoltée (18) du champ, et/ou
- une valeur ou une gamme de valeurs de teinte, de luminosité et/ou de saturation est définie par l'existence de végétaux couchés, et/ou
- une valeur ou une gamme de valeurs de teinte, de luminosité et/ou de saturation est définie par l'existence d'un couloir de passage (19), et/ou
- une valeur ou une gamme de valeurs de teinte, de luminosité et/ou de saturation est définie par l'existence d'un couloir de pulvérisation, et/ou
- une valeur ou une gamme de valeurs de teinte, de luminosité et/ou de saturation est définie par l'existence d'une tournière, et/ou
- une valeur ou une gamme de valeurs de teinte, de luminosité et/ou de saturation est définie par l'existence d'une zone (20) adjacente au champ, et/ou
- une valeur ou une gamme de valeurs de teinte, de luminosité et/ou de saturation est définie par l'existence d'un obstacle.

5. Procédé selon une des revendications précédentes, **caractérisé en ce que** dans le cadre de la détection de limite de culture par rapport à la direction perpendiculaire à la direction de déplacement (P), le système de traitement d'images (14) détecte et met en avant, notamment graphiquement,
- la limite entre les végétaux debout (17) et une zone récoltée (18) du champ, et/ou
- la limite entre les végétaux debout (17) et la zone (20) adjacente au champ, et/ou
- la limite entre les végétaux debout (17) et la tournière, et/ou
- la limite entre les végétaux debout (17) et des végétaux couchés, et/ou
- la limite entre les végétaux debout (17) et un couloir de pulvérisation.

6. Procédé selon une des revendications précédentes, **caractérisé en ce que**, par rapport à la direction perpendiculaire à la direction de déplacement (F), le système de traitement d'images (14) met en avant graphiquement l'emplacement de la limite de culture (21) respective, par une ligne (22), notamment une ligne droite (22) qui s'étend le long de la limite de culture (21) visualisée dans l'image d'affichage (A) ou dans la séquence d'images d'affichage.

7. Procédé selon la revendication 6, **caractérisé en ce que** la ligne (22) respective peut être décalée côté utilisateur dans l'image d'affichage (A) ou dans la séquence d'images d'affichage.

8. Procédé selon une des revendications 6 ou 7, **caractérisé en ce que** la ligne (22) forme un curseur virtuel.

9. Procédé selon une des revendications précédentes, **caractérisé en ce que** l'écran (15) est un écran tactile (15).

10. Procédé selon une des revendications précédentes, **caractérisé en ce qu'**un affichage de largeurs partielles (25) peut être représenté graphiquement ou est représenté graphiquement sur l'écran (15), conjointement avec l'image d'affichage (A) ou la séquence d'images d'affichage, de préférence **en ce que** l'affichage de largeurs partielles (25) représenté graphiquement se chevauche sur l'écran (15) avec l'image d'affichage (A) ou la séquence d'images d'affichage.

11. Procédé selon une des revendications précédentes, **caractérisé en ce que** le système d'assistance au conducteur (9) génère au moins une action de commande en fonction de l'emplacement d'une ou plusieurs limites de culture (21) mises en avant graphiquement dans l'image d'affichage (A) ou dans la séquence d'images d'affichage, notamment en fonction de (25) de l'emplacement de la ligne (22) respective dans l'image d'affichage (A) ou dans la séquence d'images d'affichage, de préférence **en ce que** le système d'assistance au conducteur (9) effectue un guidage de bord, et/ou **en ce que** l'action de commande comprend l'exécution de mouvements de direction de l'engin agricole (1) et/ou le déplacement transversal d'un organe de travail, notamment d'un outil frontal (2), de l'engin agricole (1).

12. Engin agricole automoteur, dans lequel l'engin agricole (1) comprend au moins un organe de travail (2-8) pour l'exécution ou l'assistance d'une tâche agricole dans un champ,
l'engin agricole (1) présentant un système d'assistance au conducteur (9) destiné à générer des actions de commande à l'intérieur de l'engin (1),
le système d'assistance au conducteur (9) présentant un dispositif à capteur (10) destiné à générer des informations de zone « amont de champ »,
le système d'assistance au conducteur (9) générant les actions de commande sur la base des informations de zone amont de champ,
le dispositif à capteur (10) présentant un système de capteur (11) à base de laser qui génère des informations de capteur concernant une zone amont de champ (13) prédéfinie pertinente de l'engin (1),
l'engin agricole (1) étant prévu et agencé pour la mise en œuvre d'un procédé selon la revendication 1.
